# EUROPÄISCHE PATENTSCHRIFT

(11) **EP 0 494 205 B1**
(45) Veröffentlichungstag und Bekanntmachung des Hinweises auf die Patenterteilung: **01.06.1994**
(21) Anmeldenummer: 90914388.5
(22) Anmeldetag: 13.09.1990
(51) Int. Cl.: B60T 8/88, B62L 3/00

(54) **ZWEIKANALIGES ANTIBLOCKIERREGELSYSTEM FÜR EIN ZWEIRADKRAFTFAHRZEUG**
TWO-CHANNEL ANTILOCK BRAKING SYSTEM (ABS) FOR A TWO-WHEELED MOTOR VEHICLE
SYSTEME D'ANTIBLOCAGE A DEUX CANAUX POUR DEUX-ROUES

(30) Priorität: 29.09.1989 DE 3932637
(43) Veröffentlichungstag der Anmeldung: 15.07.1992
(73) Patentinhaber: ROBERT BOSCH GMBH, 70442 Stuttgart (DE)
(72) Erfinder: MÜLLER, Elmar, D-7145 Markgröningen (DE); MÜLLER, Werner Elle Cour, App. 305, Nishi-ku Higashi Gaoka 75 (JP)
(86) Internationale Anmeldenummer: EP9001557
(87) Internationale Veröffentlichungsnummer: WO9104898

(56) Entgegenhaltungen:
- DE-A- 2 232 034
- DE-A- 2 549 587
- FR-A- 2 586 388
- GB-A- 2 068 068
- US-A- 4 035 032

## Beschreibung

### Stand der Technik

Aus dem Prospekt der Firma FAG Kugelfischer Georg Schäfer KG aA mit dem Titel Antiblockierregelsystem für Motorräder Publ. -Nr. HB 43 605/2 DA ist ein Motorrad-ABS mit den Merkmalen des Oberbegriffs des Anspruchs 1 bekannt.

### Vorteile der Erfindung

Bei dem bekannten Motorrad-ABS führen erkannte Fehler zum sofortigen Abschalten des ABS. Dies hat im allgemeinen während einer laufenden Regelung das sofortige Blockieren der Räder des Fahrzeugs zur Folge. Für ein Vierradfahrzeug bedeutet dies keinen sicherheitskritischen Fahrzustand. Im Gegensatz zum PKW führt aber das unerwartete Abschalten der Anlage beim Zweirad mit hoher Wahrscheinlichkeit zu einem Sturz des Fahrzeugs.

Die vorliegende Erfindung verhindert das unvermittelte Abschalten der Anlage und gewährleistet gleichzeitig die gesetzlich vorgeschriebene Mindestverzögerung (0.3 g) des Fahrzeugs auf hohen Reibwerten.

Aus der DE-OS 2232 034 ist es bekannt, die Ventile eines ABS hinsichtlich ihrer Ansprechzeit zu überwachen. Wird eine zu lange Ansprechzeit festgestellt so wird ein Abschaltsignal für das ABS erzeugt, das jedoch bei Vorliegen eines bestimmten Radverhaltens für eine bestimmte Zeit gesperrt wird und erst danach die Abschaltung bewirkt.

Zusätzlich wird bei der Erfindung der Fahrer durch eine Blinkansteuerung der Sicherheitslampe auf den kritischen Fahrzustand aufmerksam gemacht. Die Unteransprüche zeigen weitere Ausbildungen des erfindungsgemäßen Systems auf.

Es soll hier hinsichtlich des Ausdrucks zweikanaliges ABS klargestellt werden, daß es sich um ein ABS mit zwei Sensoren und zwei Druckmodulatoren handelt. Ob aus Redundanzgründen mehr als zwei Auswertekanäle vorgesehen sind, ist dabei unwesentlich.

### Figurenbeschreibung

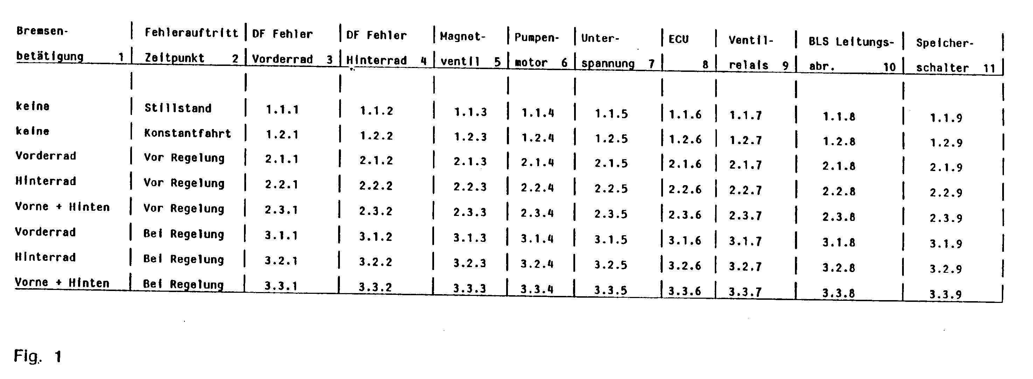

In der Tabelle der Fig. 1 sind die möglichen Fehler für verschiedene Situationen klassifiert.

In Spalte 1 ist jeweils gesagt, ob und wo gebremst wird. In Spalte 2 sind verschiedene Ereigniszeitpunkte für den Ausfall einzelner Komponenten (Spalte 3 bis 11) aufgelistet, wobei die einzelnen Ausdrücke folgendes bedeuten
- Stillstand: : Fehler tritt bei Fahrzeughalt auf
- Konstantfahrt: : Fehler tritt bei Fahrt auf
- Vor Regelung: : Fehler tritt während der Fahrt bei Teilbremsung oder zuerst ohne Bremsen und Bremsbetätigung in der Warnzeit auf.
- Bei Regelung: : Fehler tritt während einer ABS-Regelung auf.

### 2.3.1 bedeutet damit beispielsweise:

Während der ungebremsten (oder teilgebremsten) Fahrt fällt der Drehzahlfühler am Vorderrad aus, wodurch die Regelung aufgelöst wird (über Schlupfsignal und/oder Verzögerungssignal). Danach erfolgt eine Bremsung beider Räder in die Warnzeit hinein.

Aus der Tabelle der Fig. 1 werden bezüglich der Verarbeitung von Drehzahlfilterfehler fünf Fehlerklassen abgeleitet, bei denen unterschiedlich reagiert wird.

### 1. Fehlerklasse umfaßt die Fehler 1.1.1 und 1.1.2

Es wird wie folgt reagiert:
a) Das ABS-System wird sofort abgeschaltet
b) Die Warnlampe wird mit Dauersignal angesteuert. Das normale Bremssystem ist verfügbar.

### 2. Fehlerklasse umfaßt die Fehler 1.2.1 und 1.2.2

Es wird wie folgt reagiert:
a) Das ABS-System wird nach einer Warnzeit von z.B. 10 sec. abgeschaltet
b) Die Warnlampe wird während der Warnzeit gepulst, nach der Abschaltung mit Dauersignal angesteuert. Nach der Abschaltung ist das normale Bremssystem verfügbar.

### 3. Fehlerklasse umfaßt die Fehler 2.1.1, 2.2.2, 3.1.1, 3.2.2

Es wird wie folgt reagiert:
a) Es ist nach Fehlererkennung eine eingeschränkte ABS-Funktion wirksam und zwar bis zum Ende der Regelung oder bis zum Fahrzeugstillstand; danach erfolgt Abschaltung. Bei der eingeschränkten ABS-Funktion wird über das 3/3-Magnetventil Druck gepulst am defekten Rad aufgebaut und zwar bis eine berechnete oder analog angezeigte Verzögerung von 0.3 g erreicht wird; dann erfolgt Druckhalten.
b) Es erfolgt während der eingeschränkter Funktion eine gepulste Ansteuerung der Warnlampe; danach erfolgt Daueransteuerung (nach Abschaltung). Nach der Abschaltung ist das normale Bremssystem verfügtbar.

### 4. Fehlerklasse umfaßt die Fehler 2.1.2, 2.2.1, 3.1.2, 3.2.1

Es wird wie folgt reagiert:
a) Auch hier ist nach Fehlererkennung eine eingeschränkte ABS-Funktion bis zum Ende der Regelung oder Fahrzeugstillstand wirksam: danach erfolgt Abschaltung. Die eingeschränkte ABS-Funktion besteht in einer normalen Regelung des Bremsdrucks des intakten Rades, bei eingeschränkter Referenzbildung (nur das geregelte Rad trägt bei).
b) Während der eingeschränkten Funktion erfolgt gepulste Ansteuerung der Warnlampe; nach Abschaltung erfolgt Dauersteuerung. Nach dem Abschalten ist das normale Bremssystem verfügbar.

### 5. Fehlerklasse umfaßt die Fehler 2.3.1, 2.3.2, 3.3.1, 3.3.2

Es wird wie folgt reagiert:
a) Es wird nach Fehlererkennung eine eingeschränkte ABS-Funktion aufrechterhalten und zwar bis zum Ende der Regelung oder Fahrzeugstillstand; danach erfolgt Abschaltung. Bei der eingeschränkten ABS-Funktion wird eine normale Regelung des intakten Rades, bei eingeschränkter Referenzbildung aufrechterhalten. Zusätzlich erfolgt gepulster Druckaufbau über das 3/3-Magnetventil am Rad mit dem defekten Fühler und zwar solange bis eine berechnete oder analog angezeigte Fahrzeugverzögerung von 0.3 g erreicht wird; dann erfolgt Druckhalten am defekten Rad.
b) Während der eingeschränkten Funktion wird die Warnlampe gepulst angesteuert. Nach Abschaltung erfolgt Daueransteuerung. Nach Abschalten des ABS ist das normale Bremssystem verfügbar.

Für die anderen in der Tabelle aufgeführte Fehler gilt folgendes:
a) Das ABS wird sofort abgeschaltet bei den Fällen 1.1.3 (ein Ventil fällt aus), 1.1.4 (Pumpenmotor defekt), 1.1.5 (es wird eine Unterspannung festgestellt) 1.1.6 bis 3.3.6 (Fehler in der Elektronik), 1.1.7 bis 3.3.7 (Defekt am Ventilrelais), 1.1.8 (Bremslichtschalter Leitungsabriß) und 1.1.9 (Auftreten eines Schalterfehlers am Hydraulikspeicher).
b) Das ABS wird nach einer Warnzeit von z.B. 10 sec. abgeschaltet in den Fällen 1.2. 3, 2.1.3, 2.2.3 und 2.3.3 (ein Magnetventilausfall unter verschiedenen Umständen), 1.2.4, 2.1.4, 2.2.4 und 2.3.4 (Pumpenmotorausfall unter verschiedenen Umständen) 1.2.5, 2.1.5, 2.2.5 und 2.3.5 (bei Auftreten einer Unterspannung unter verschiedenen Umständen) 1.2.8, 2.1.8, 2.2.8 und 2.3.8 (Leitungsabriß des Bremslichtschalters unter verschiedenen Umständen) und 1.2. 9, 2.1.9, 2.2.9 und 2.3.9 (Auftreten eines Speicherschalterfehlers unter verschiedenen Umständen).
c) Schließlich wird das ABS erst abgeschaltet, wenn die Regelung beendet ist oder das Motorrad zum Stillstand gekommen ist, in den Fällen 3.1.3, 3.2.3 und 3.3.3 (ein Magnetventilausfall während der Regelung), 3.1.4, 3.2.4 und 3.3.4 (Pumpenmotorfehler während der Regelung) 3.1.5, 3.2.5 und 3.3.5 (Auftreten einer Unterspannung während der Regelung) 3.1.8, 3.2.8 und 3.3.8 (Leitungsabriß BLS während der Regelung) und 3.1.9, 3.2.9 und 3.3.9 (Speicherschalterfehler während der Regelung).
   In den Fällen b) und c) erfolgt vom Erkennen des Fehlers bis zur gänzlichen Abschaltung eine gepulste Ansteuerung der Warnlampe, danach eine Daueransteuerung.

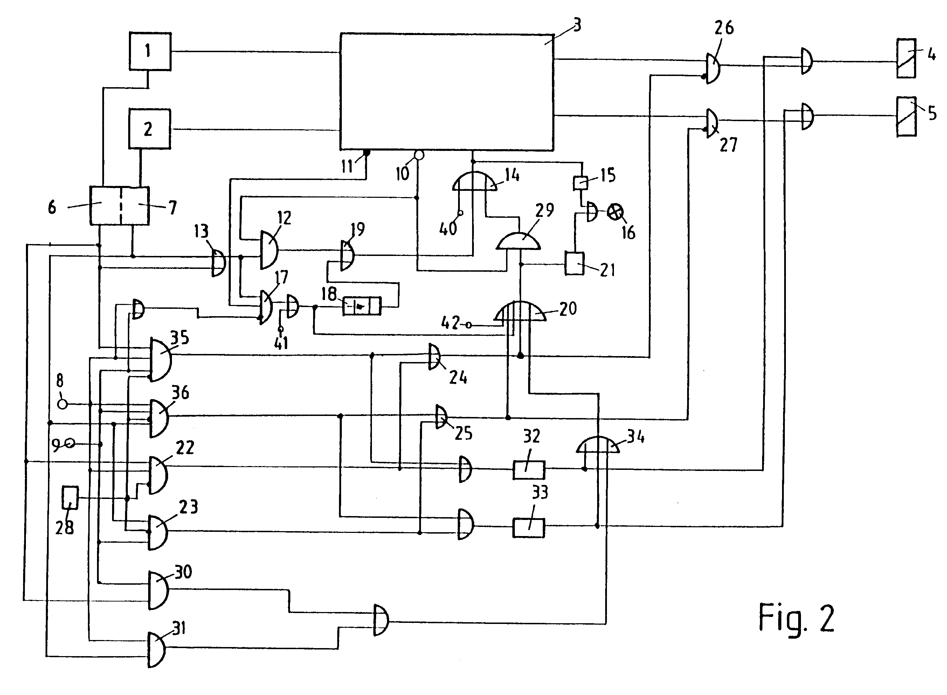

Ein Ausführungsbeispiel zur Realisierung der obigen Reaktionen auf einen Sensorausfall zeigt die Fig. 2 der Zeichnung. Dort sind den beiden Fahrzeugrädern zugeordnete Sensoren mit 1 und 2, eine Auswerteschaltung mit 3 und je ein den Radbremsen zugeordnetes Magnetventil mit 4 und 5 bezeichnet. Entsprechend dem durch die Sensoren 1 und 2 ermittelten Radbewegungsverhalten wird der Bremsdruck an den Radbremsen variiert.

Durch die Uberwachnungsblöcke 6 und 7 werden die Sensoren 1 und 2 überwacht. Die Überwachungsblöcke 6 oder 7 geben ein Signal ab, wenn der zugehörige Sensor defekt ist. An einer Klemme 8 liegt Signal an, wenn die Vorderradbremse betätigt ist. An einer Klemme 9 liegt Signal an, wenn die Hinterradbremse betätigt ist. Über eine Klemme 10 gibt die Auswerteschaltung 3 ein Signal ab, wenn das Fahrzeug steht, über eine Klemme 11 ein Signal, wenn das Fahrzeug fährt.

### 1. Fehlerklasse

Wird einer der Sensoren 1 oder 2 während eines Stillstands defekt, so wird ein Und-Gatter 12 (über die Klemme 10 und ein Oder-Gatter 13) durchlässig und gibt ein Abschaltsignal an die Auswerteschaltung 3 (über ein Oder-Gatter 14). Gleichzeitig wird durch dieses Signal ein bistabiles Glied 15 gekippt, das dann eine Warnlampe 16 (dauer) ansteuert.

### 2. Fehlerklasse

Fährt das Fahrzeug (Signal an Klemme 11) und fällt ein Sensor aus, so wird, keine Bremsbetätigung vorausgesetzt - ein Und-Gatter 17 durchlässig und stößt ein Zeitglied 18 an, das nach einer vorgegebenen Zeit über ein Oder-Gatter 19 und ein Oder-Gatter 14 das ABS abschaltet. In der Wartezeit des Zeitglieds 18 wird durch das Ausgangssignal des Und-Gatters 17 über ein Oder-Gatter 20 ein Impulsgenerator 21 aktiviert, der die Warnlampe 16 gepulst ansteuert, bis anschließend die Warnlampe durch das Abschaltsignal und das bistabile Glied 15 voll angesteuert wird.

### 3. Fehlerklasse

Mittels Und-Gatter 22 und 23 wird geprüft, ob der Sensor 1 oder 2 an einem gebremsten Rad ausgefallen ist. Ist dies der Fall, so wird über ein Oder-Gatter 24 oder 25 und ein Und-Gatter 26 oder 27 die Ansteuerung eines der Ventile 4 oder 5 unterbrochen, sodaß Druck an der zugehörigen Bremsen aufgebaut wird. Das Sperrsignal endet, wenn ein Fahrzeugverzögerungsgeber 28 bei Erreichen einer Fahrzeugverzögerung von z.B. 0,3 g ein Signal abgibt, oder wenn die berechnete Fahrzeugverzögerung einen Schwellwert von beispielweise 0,3 g erreicht hat, das die Und-Gatter 22 oder 23 sperrt. Die Rückflanke des Ausgangssignals eines der Und-Gatter 22 oder 23 stößt einen der bistabilen Glieder 32 oder 33 an, das nun das Magnetventil 4 oder 5 des Rads, dessen Sensor ausgefallen ist, in die Konstanthaltestellung bringt und damit den eingesteuerten Druck hält. In der Periode der eingeschränkten ABSFunktion wird über das Oder-Gatter 20 eine gepulste Ansteuerung der Warnlampe 16 vorgenommen. Kommt das Fahrzeug zum Stillstand, so wird über ein Oder-Gatter 34, das Oder-Gatter 20 und ein Und-Gatter 29 die Abschaltung eingeleitet und die Warnlampe 16 dauer angesteuert.

### 4. Fehlerklasse

Hier wird mittels Und-Gatter 30, 31 geprüft, ob der Sensor des nicht gebremsten Fahrzeugrads ausfällt. Das dann erzeugte Ausgangssignal eines der Und-Gatter 30 oder 31 läßt das gebremste Rad, dessen Sensor ja intakt ist, unbeeinflußt, löst jedoch über die Oder-Gatter 34 und 20 zuerst die gepulste Warnlampenansteuerung aus, die dann ab Fahrzeugstillstand und ABS-Abschaltung in eine Daueransteuerunf übergeht. Nicht eingezeichnet ist je eine Verbindung zwischen den Und-Gattern 30 und 31 und der Auswerteschaltung 3, die eine Umschaltung in der Auswerteschaltung auf Referenzbildung mit dem noch intakten Sensor bewirken.

### 5. Fehlerklasse

Schließlich prüfen die beiden Und-Gatter 35 und 36, ob während der Betätigung beider Bremsen einer der Sensoren ausfällt. Ist dies der Fall, so wird die Ansteuerung des zugehörigen Magnetventils 4 oder 5 über Oder-Gatter 24 bzw. 25 verhindert und damit Druck aufgebaut.

Endet das Ausgangssignal des Und-Gatters 35 bzw. 36, weil der Fahrzeugverzögerungsgeber 28 bei Erreichen einer bestimmten Fahrzeugverzögerung ein Signal abgibt, so wird durch die Rückflanke dieses Signals eines der bistabilen Glieder 32 oder 33 gesetzt und damit an dem entsprechenden Rad Druck konstant gehalten. Das andere Rad bleibt unbeeinflußt. Die Warnlampenansteuerung entspricht der der 3. Fehlerklasse.

Im Falle der Fehler gemäß a) oben wird ein entsprechendes Signal auf die Klemme 40 des Oder-Gatter 14 gegeben und damit das ABS sofort abgeschaltet.

Im Falle der Fehler gemäß b) oben wird ein Signal auf eine Klemme 41 gekoppelt, das dann die Abschaltung nach einer Zeit und das Takten der Warnlampe in dieser Zeit bewirkt.

Schließlich wird ein Fall der Fehler gemäß c) oben ein Signal auf eine Klemme 42 gegeben, durch das ab Fahrzeugstillstand das ABS abgeschaltet und bis dahin die Warnlampe 16 getaktet wird. Auf der Klemme 10 kann ein Signal erscheinen, wenn entweder Fahrzeugstillstand oder die Regelung beendet ist.

Das Ausführungsbeispiel der Fig. 2 ist als Hardware Schaltung ausgeführt. Seine Funktionen können natürliche auch mittels eines Rechners und entsprechend ausgebildeten Software realisiert werden.

## Patentansprüche

1. Verfahren zur Abschaltung eines zweikanaligen Antiblockierregelsystem für die beiden Räder eines Zweiradkraftfahrzeugs mit getrennt betätigbaren Bremsen bei auftretenden Fehlern, dadurch gekennzeichnet, daß beim gleichzeitigen Bremsen beider Räder und Auftreten eines Fehlers in einem Kanal eine eingeschränkte ABS-Funktion beibehalten wird und zwar in Form einer normalen Regelung mit dem intakten Kanal und einer Druckeinsteuerung an der Bremse des defekten Kanals bis eine bestimmte Fahrzeugverzögerung erreicht ist und daß erst bei Fahrzeugstillstand oder Ende der ABS-Regelung das ABS abgeschaltet wird.

2. Verfahren zur Abschaltung nach Anspruch 1, dadurch gekennzeichnet, daß beim Bremsen eines Fahrzeugrads und Auftreten eines Fehlers im anderen Kanal die Regelung an der Bremse des intakten Regelkanals bis zum Fahrzeugstillstand oder bis zum Regelungsende beibehalten wird und daß danach das ABS abgeschaltet wird.

3. Verfahren zur Abschaltung nach Anspruch 1 oder 2, dadurch gekennzeichnet, daß beim Bremsen eines Fahrzeugrads und Auftreten eines Fehlers im zugehörigen Kanal Bremsdruck an diesem Rad bis zum Erreichen einer vorgegebenen Fahrzeugverzögerung eingesteuert wird und daß erst bei Fahrzeugstillstand oder Regelungsende das ABS abgeschaltet wird.

4. Verfahren zur Abschaltung nach einem der Ansprüche 1 - 3, dadurch gekennzeichnet, daß bei Fahrzeugfahrt ohne Bremsvorgang und Auftreten eines Fehlers in einem Kanal nach einer Warnzeit das ABS abgeschaltet wird.

5. Verfahren zur Abschaltung nach einem der Ansprüche 1 - 4, dadurch gekennzeichnet, daß ab dem Erkennen eines Fehlers und dem endgültigen Abschalten des ABS ein getaktetes Warnsignal und danach ein Dauerwarnsignal erzeugt wird.

6. Verfahren zur Abschaltung nach einem der Ansprüche 1 - 5, dadurch gekennzeichnet, daß der Fehler im Ausfall eines Drehzahlfühlers besteht.

7. Verfahren zur Abschaltung nach einem der Ansprüche 1 - 6, dadurch gekennzeichnet, daß bei Ausfall eines Bremsdrucksteuerventils oder der Hydraulikpumpe, oder bei Unterspannung der Stromversorgung, oder bei Leitungsabriß des Bremslichtschalters oder bei Auftreten eines Schalterfehlers am Hydraulikspeicher ohne Regelung das ABS nach einer Warnzeit abgeschaltet wird.

8. Verfahren zur Abschaltung nach einem der Ansprüche 1 - 7, dadurch gekennzeichnet, daß bei Ausfall eines Bremsdrucksteuerventils während eines Regelvorgangs die eingeschränkte ABS-Funktion am anderen Rad bis Regelungsende oder Fahrzeugstillstand beibehalten wird.

9. Verfahren zur Abschaltung nach einem der Ansprüche 1 - 8, dadurch gekennzeichnet, daß bei Ausfall der Hydraulikpumpe oder Auftreten einer Unterspannung oder Leitungsabriß des Bremslichtschalters oder bei Schalterfehlern der Hydraulikspeichers während einer Regelung das ABS erst nach Regelungsende oder Fahrzeugstillstand abgeschaltet wird.

## Claims

1. Method for switching off, when faults occur, a two-channel antilock braking system for the two wheels of a two-wheeled motor vehicle with brakes which can be actuated separately, characterized in that when the two wheels are braked simultaneously and when a fault occurs in one channel a limited antilock function is maintained, specifically in the form of normal control with the intact channel and an application of pressure at the brake of the defective channel until a specific deceleration of the vehicle is achieved, and in that the antilock system is not switched off until the vehicle comes to a standstill or until the end of the antilock control.

2. Method for switching off according to Claim 1, characterized in that when a vehicle wheel is braked and a fault occurs in the other channel the control at the brake of the intact control channel is maintained until the vehicle comes to a standstill or until the end of control, and in that the antilock system is subsequently switched off.

3. Method for switching off according to Claim 1 or 2, characterized in that when a vehicle wheel is braked and a fault occurs in the associated channel brake pressure is applied to this wheel until a predetermined deceleration of the vehicle is achieved, and in that the antilock system is not switched off until the vehicle comes to a standstill or until the end of control.

4. Method for switching off according to one of Claims 1 - 3, characterized in that when the vehicle is travelling without a braking operation and a fault occurs in one channel the antilock system is switched off after a warning time.

5. Method for switching off according to one of Claims 1 - 4, characterized in that a clocked warning signal and subsequently a continuous warning signal are produced starting from the detection of a fault and the ultimate switching off of the antilock system.

6. Method for switching off according to one of Claims 1 - 5, characterized in that the fault consists in a failure of an rpm sensor.

7. Method for switching off according to one of Claims 1 - 6, characterized in that when a brake pressure control valve or the hydraulic pump fails or when there is undervoltage of the power supply or in the event of a line break of the brake light switch or in the event of a switch fault occurring at the hydraulic accumulator without control the antilock system is switched off after a warning time.

8. Method for switching off according to one of Claims 1 - 7, characterized in that when a brake pressure control valve fails during a control process the restricted antilock system function is maintained at the other wheel until the end of control or until the vehicle comes to a standstill.

9. Method for switching off according to one of Claims 1 - 8, characterized in that when the hydraulic pump fails or an undervoltage occurs or in the event of a line break of the brake light switch or in the event of switch faults of the hydraulic accumulator during a control the antilock system is not switched off until the end of control or until the vehicle comes to a stand-still.

## Revendications

1. Procédé de coupure d'un système de régulation antiblocage à deux canaux pour les deux-roues d'un véhicule à moteur à deux roues, avec des freins actionnés séparément, en présence d'un défaut, procédé caractérisé en ce qu'en cas de freinage simultané des deux roues et arrivée d'un défaut dans un canal, on conserve un fonctionnement sans restriction du système ABS et cela sous la forme d'une régulation normale avec le canal intact et une commande de pression dans le frein du canal défectueux jusqu'à obtenir une décélération donnée du véhicule puis, ce n'est qu'à l'arrêt du véhicule ou à la fin de la phase de régulation ABS, que l'on coupe le système ABS.

2. Procédé de coupure selon la revendication 1, caractérisé en ce que lorsqu'on freine une roue de véhicule et à l'arrivée d'un défaut dans l'autre canal, on conserve la régulation sur le frein du canal de régulation intact jusqu'à l'arrêt du véhicule ou jusqu'à la fin de la régulation puis, on coupe le système ABS.

3. Procédé de coupure selon la revendication 1 ou 2, caractérisé en ce que lorsqu'on freine une roue de véhicule et à l'arrivée d'un défaut dans le canal correspondant, on commande la pression de frein de cette roue jusqu'à ce que l'on ait obtenu une décélération prédéterminée du véhicule et on coupe le système ABS seulement après l'arrêt du véhicule ou la fin de la phase de régulation.

4. Procédé de coupure selon l'une des revendications 1 à 3, caractérisé en ce qu'en cas de déplacement sans phase de freinage et arrivée d'un défaut dans un canal, on coupe le système ABS après une période d'avertissement.

5. Procédé de coupure selon l'une des revendications 1 à 4, caractérisé en ce qu'à partir de la reconnaissance d'un défaut et la coupure définitive du système ABS, on génère un signal avertisseur cadencé puis, un signal avertisseur permanent.

6. Procédé de coupure selon l'une des revendications 1 - 5, caractérisé en ce que le défaut consiste dans la défaillance d'un capteur de vitesse de rotation.

7. Procédé de coupure selon l'une des revendications 1 - 6, caractérisé en ce qu'en cas de défaut de la soupape de commande de pression ou de la pompe hydraulique ou de sous-tension de l'alimentation électrique ou de rupture de ligne du commutateur de lumière ou de freinage ou à l'arrivée d'un défaut de commutateur de l'accumulateur hydraulique, on coupe sans régulation le système ABS après un temps d'avertissement.

8. Procédé de coupure selon l'une des revendications 1 - 7, caractérisé en ce qu'en cas de défaillance d'une soupape de commande de pression de frein, pendant une phase de régulation, on conserve le fonctionnement ABS sans restriction sur l'autre roue jusqu'à la fin de la régulation ou jusqu'à l'arrêt du véhicule.

9. Procédé de coupure selon l'une des revendications 1 - 8, caractérisé en ce qu'en cas de défaillance de la pompe hydraulique ou de sous-tension ou de rupture de ligne du commutateur des feux de freinage ou d'un défaut de commutation de l'accumulateur hydraulique, pendant une régulation, on coupe le système ABS seulement après la fin de la régulation ou l'arrêt du véhicule.
